# EUROPEAN PATENT APPLICATION

(11) **EP 1 538 793 A2**
(43) Date of publication of application: **08.06.2005**
(21) Application number: 04300825.9
(22) Date of filing: 30.11.2004
(51) Int. Cl.: H04L 12/56

(54) **Tracing active connection modify failures**

(30) Priority: 02.12.2003 US 724711
(71) Applicant: ALCATEL, 75008 Paris (FR)
(72) Inventor: Weedmark, Mark, Kanata, Ontario K2K 1X7 (CA); Sorrini, Piero, Ottawa, Ontario K2K 3E2 (CA)
(74) Representative: Feray, Valérie

(57) **Abstract**

Adding a trace transit list (TTL) information element (IE) to the Modify Request and Modify Reject messages enables automatic tracing of an ACM failure at the source node. As the Modify Request message progresses down the active connection to the destination node, logical node and logical link identifiers are collected in the TTL IE. If the Modify Request fails at a particular node, the failure cause, the trace of logical nodes and logical links to the failed node, along with vendor specific diagnostic information, is added to the Modify Reject message. The TTL IE information progresses back to the source node in the Modify Reject message without being altered. Once the Modify Reject message reaches the source node, the network operator can extract the TTL IE information and determine the source node of the ACM failure.

## Description

### Field of the Invention

This invention relates to connection-oriented communication networks and in particular to tracing failures of active connection modify (ACM) requests in such networks.

### Background of invention

In a connection-oriented network, the transfer of information occurs by establishing an end to end connection for the duration of the call. Associated with a connection are particular traffic parameters like bandwidth and service categories. These traffic parameters are normally setup for the duration of the call, however, there are user applications when the traffic parameters associated with a connection needs to be modified without being service affecting. For instance, a user browsing the Internet may want to temporarily increase his bandwidth to watch a video or download a large file from the Internet.

Traffic modifications can be performed on existing connections by performing an Active Connection Modification specified in ITU-T Recommendations Q.2963.1, Q2963.2 and Q.2963.3 and referenced in ATM specification af-cs-0148.000, Modification of Traffic Descriptor for an Active Connection, Addendum to UNI 4.0/PNNI 1.0/AINI", The ATM Forum Technical Committee, July 2000. These specifications indicate the control plane signaling required to support ACM.

When an ACM is requested, the source node must reserve any resources it requires based on the new traffic requirements and then forward a Modify Request message to the next node along the connection. As this message progresses to the destination node, each node along the path reserves the required resources based on the newly requested traffic parameters. Once the destination node receives this request, it will allocate any additional resource requirements and send a Modify Acknowledgement back to the source node. As the Acknowledgement message progresses back to the source node, each node that receives this message will allocate its resources that were reserved, from the Modify Request message, and allow the transmission of data at the new rate. Once the source node receives the Modify Acknowledgement and allows the transmission of data at the new rate, the ACM for the network connection is complete.

In particular scenarios, however, the ACM may fail at one of the nodes along the connection being modified. For instance, a Modify Request message may fail at a particular node due to bandwidth resource availability or due to the non-support of the ACM service by the node. In the first case, a Modify Reject message is generated by the failing node to the preceding node and is propagated back to the source node along the connection. In the second scenario, the failing node is unable to process the Modify Request message because it does not support ACM and thus is unable to decode the Modify Request message. When this occurs, the failing node drops the Modify Request message and signals a Status message in the signaling plane to the preceding node indicating that the message type is non-existent or not-implemented and that the Modify Request message was not processed. When the preceding node receives this Status message, reserved resources from the ACM Request are released and a Modify Reject message is generated to the preceding node. As each node receives the Modify Reject message, resources that were reserved during the ACM Request are released and the old traffic requirements are maintained.

One problem with the above signaling procedure is that there is no information contained in the Modify Reject message to indicate where the ACM failure occurred in the network. Without this information, an ACM failure due to bandwidth requirement availability would require a network operator to spend valuable time and would have to be knowledgeable enough to trace the signaling plane messages along the connection to determine where the bandwidth resources were not adequate to complete the ACM. Once this is determined, the network operator could possibly take corrective action to ensure the ACM succeeds (i.e. allocate additional bandwidth to a trunk so that the bandwidth requirements are met). If a network operator did not have the time or knowledge to track down the node causing the ACM failure, the call would have to be released and reestablished with the new traffic parameters. This is highly undesirable because it would be service affecting.

Furthermore, an ACM failure due to a node not supporting the ACM service would similarly require a network operator to spend valuable time and be knowledgeable enough to trace the signaling plane messages along the connection to determine the last node the ACM service was supported on before it was rejected. These issues become more significant when one considers that most service providers are using multi-vendor equipment that may be managed by different network management systems.

There is a requirement to define a method of providing diagnostic information that easily identifies the source of ACM failures in order to reduce the time and the skill level requirements of an operator, and thereby reducing network operating costs. In addition, the availability of this type of information would often result in network operators taking corrective actions on ACM failures for bandwidth resource allocation problems rather than releasing the call and re-establishing it with the new traffic parameters, which would be service affecting.

### Summary of the Invention

It is an object of the present invention to provide a connection oriented network with means for automatically tracing active connection modify failures.

Accordingly, the invention provides a method for identifying the failure and failure node of an active connection modify in a connection oriented communication network. The method comprises the steps of: appending a trace transit list information element (TTL IE) to a Modify Request message; transmitting the Modify Request message from a source node to a destination node along the active connection; and at each node along the active connection, modifying a parameter of the active connection while recording in the trace transit list information element failure identification data. Identification data comprise logical node and logical port information which will be used for failure node identification.

If a node along the active connection does not enable modification of the parameter, the method according to the invention provides steps for generating a Modify Reject message at the failing node along the connection; updating the TTL IE with failure cause information; and appending this TTL IE to the Modify Reject message and returning the Modify Reject message to the source node.

The method of the present invention provides the ability to immediately identify the node at which the ACM failure occurred and provides more detailed vendor specific information on the cause of the failure. Since this information is automatically collected, the operator is not required to view the available resources on each node along the connection to determine which node had insufficient resources to apply the ACM request, or did not support the ACM service. As a result, the skill level requirements of an operator and the time for identifying the faulty node are reduced, resulting in a reduction in network operating costs.

Also, since identification of the cause and location of an ACM failure is automatic, human error is practically eliminated.

### Brief description of the drawings

The foregoing and other objects, features and advantages of the invention will be apparent from the following more particular description of the preferred embodiments, as illustrated in the appended drawings, where:
**Figure 1** illustrates an example of a connection oriented communication network during an ACM failure.
**Figure 2A** shows the changes proposed according to the invention to the Modify Request message for an ACM.
**Figure 2B** shows the changes proposed according to the invention to the Modify Reject message for an ACM.
**Figure 3** shows the fields of a trace transit list (TTL) information element (IE).

### Description of the Preferred Embodiments

The present invention provides means for automatically tracing the source (node) of an active connection modify (ACM) failure. When an ACM failure occurs and a Modify Reject message is received at the originating node of the Modify Request, detailed diagnostic information is provided. This diagnostic information specifies the logical node identifiers and logical link identifiers that the Modify Request traversed before the Modify Request failed and a Modify Reject message was generated. In addition, the diagnostic information can contain vendor specific information, which provides more specific information on the cause of the Modify Request failure.

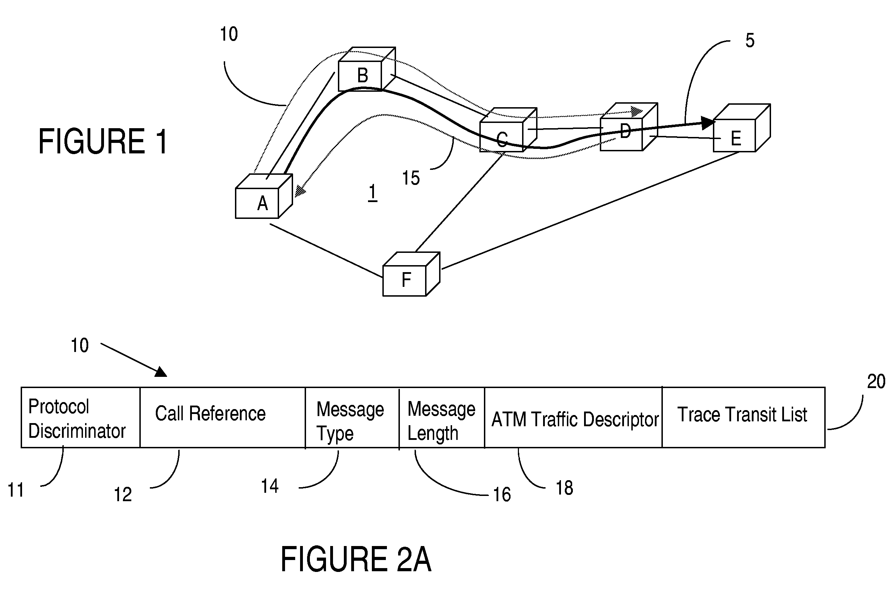

Figure 1 shows an example of an ATM network **1** with six nodes **A-F.** In this network, node **A** is connected to two intermediate nodes **B** and **F**, and both nodes **B** and **F** are also connected to another intermediate node **C.** Node **C** is also connected to an intermediate node **D**, which is connected to the destination node **E**. It is to be noted that since most service-provider networks use multi-vendor equipment, the nodes of the network may have different operational parameters, and may be managed by different network management systems. As well, some nodes may not support services such as ACM.

It is to be noted that the network configuration shown in Figure 1 is provided by way of example only. In general, large communication networks have many possible links and nodes available to set up a connection between two end users. As several nodes and links may be used to setup a particular connection in the network, this makes the task of locating network problems and inefficiencies difficult to track.

Let's assume that a connection A-B-C-D-E, identified at **5,** is established (active) between nodes **A** and **E** of network **1,** and that this has a certain bandwidth. If it is desired to change the bandwidth of connection **5**, source node **A** receives a "Modify Request" specifying the requested traffic parameters, as shown at **10**. Node **A** reserves additional bandwidth resources required by the Modify Request and forwards the Modify Request to the next node along the connection. As the request message progresses to the destination node, each node along the path reserves the required resources based on the requested traffic parameters. In this example, the Modify Request message makes it to Node **D**, where it fails due to, let's say bandwidth resource availability.

Figure 2A illustrates the mandatory information elements (IEs) in a Modify Request message, along with the addition of an optional trace transit list (TTL 20) IE proposed in this invention. Thus, the mandatory IEs for a Modify Request message are a Protocol Discriminator **11** (used to clarify protocol information such as DSS2, UNI3.1, UNI4.0, BISUP, BICI, and PNNI), a Call Reference **12**, a Message type **14**, a Message length **16**, an ATM traffic descriptor **18**. For details on each of these mandatory fields, refer to the ATM specification af-cs-0148.000, Modification of Traffic Descriptor for an Active Connection, Addendum to UNI 4.0/PNNI 1.0/AINI", The ATM Forum Technical Committee, July 2000. T

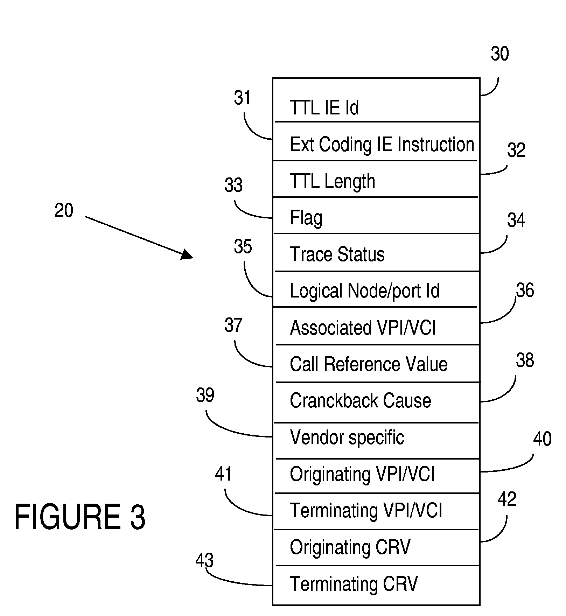

The present invention proposes to add to the modify request message an optional TTL IE **20**, which is shown in Figure 3. This IE, added to the Modify Request of an ACM, is similar to that used in the ATM specification af-cs-0141.000 "PNNI Addendum for Path and Connection Trace Version 1.0", The ATM Forum Technical Committee. The TTL IE provides information about the call particulars at every network node along the route of the respective cell, recording the path traversed by the Modify Request message from the source node to the destination node by providing node and port identification, field **35**. It also includes other fields such as a vendor specific field **39**, where the vendor may record additional vendor specific diagnostic information regarding the cause of the failure. The remainder of the fields 30-34, 36-38 and 40-43, in the TTL IE which are illustrated on Figure 3 are described in specification af-cs-0141.000.

Referring back to Figure 1, the Modify Request message **10** is propagated along the existing connection **5** towards the destination node. As each node receives the Modify Request, it adds in its logical node identifier and the egress logical port identifier (field **35**) that the connection is on. Once node **D** receives the Modify Request message and fails on bandwidth resource availability, node **D** will generate a Modify Reject message shown at **15.**

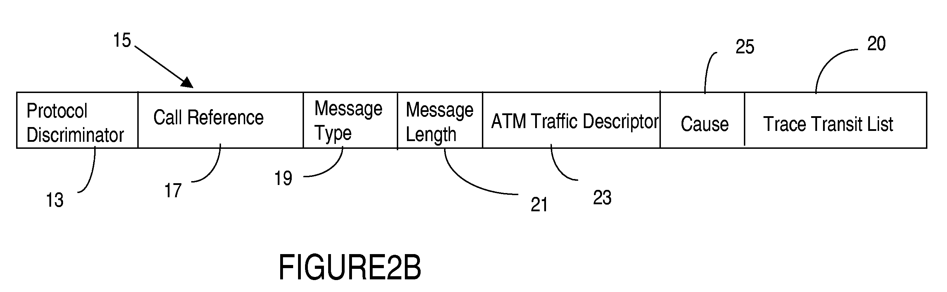

Figure 2B illustrate the mandatory information elements (IEs) in a Modify Reject message **15**, which are a Protocol Discriminator **13**, a Call Reference **17**, a Message type **19**, a Message Length **21**, an ATM traffic descriptor **23**, and a Cause **25**. The fields in this message are described also in the above-identified specification af-cs-0141.000.

As in the case of the Modify Request message, an optional TTL IE **20** is added according to the invention to the Modify Reject message which includes all logical node identifiers and logical port identifiers collected by the TTL IE **20** from the Modify Request message **10.** Modify Reject message **15** is sent to the preceding node, which is in the example of Figure 1 node **C**, and is propagated back to the source node **A** along connection **5**. As this message progress back to the source node, the TTL IE information **20** is not modified. Once the source node receives the Modify Reject message **15,** the TTL IE information can be extracted to determine the source node of the ACM failure.

## Claims

1. A method for identifying the failure and failure node of an active connection modify in a connection oriented communication network, comprising the steps of:
appending a trace transit list information element (20) to a modify request message (10);
transmitting said modify request message (10) from a source node (A) to a destination node (E) along said active connection (5); and
at each node (A-D) along said active connection (5), modifying a parameter of said active connection while recording in said trace transit list information element (20) failure identification data.

2. The method of claim 1, further comprising:
generating a Modify Reject message (15) at a node (D) along said connection (5) if said node does not enable modification of said parameter;
updating said trace transit list information element (20) from said modify request message (10) with failure cause information; and
appending said trace transit list information element (20) to said Modify Reject message (15) and returning said Modify Reject message (15) to said source node (A).

3. The method of claim 1, wherein said failure identification data includes the logical node and logical port trace of the failed modify request.

4. The method of claim 1, wherein said failure identification data includes failure cause information.

5. The method of claim 4, wherein said failure cause information includes vendor specific information.

6. The method of claim 1, wherein said parameter is the bandwidth allocated to said connection.

7. The method of claim 1, wherein said failure to modify includes the capability of a node along said connection to support the modify of an active connection of said parameter.
